# EUROPEAN PATENT APPLICATION

(11) **EP 2 474 416 A1**
(43) Date of publication of application: **11.07.2012**
(21) Application number: 10812074.2
(22) Date of filing: 31.08.2010
(51) Int. Cl.: B32B 27/36, C08K 3/30, C08K 3/38, C08L 67/04

(54) **LAMINATE AND STRETCHED LAMINATE USING SAME**

(30) Priority: 31.08.2009 JP 2009199941
(71) Applicant: Kureha Corporation, Chuo-ku Tokyo 103-8552 (JP)
(72) Inventor: SUZUKI Yoshinori, Tokyo 103-8552 (JP); WATANABE Takahiro, Tokyo 103-8552 (JP); SATO Hiroyuki, Tokyo 103-8552 (JP); KATO Ryo, Tokyo 103-8552 (JP)
(74) Representative: HOFFMANN EITLE
(86) International application number: PCT/JP2010/064800
(87) International publication number: WO 2011/025028

(57) **Abstract**

A laminate comprising:
a crystallized polyglycolic acid-based resin layer containing 100 parts by mass of a crystallized polyglycolic acid-based resin having a spherulite diameter of 1 to 30 µm and 0.0075 to 0.20 parts by mass of at least one nucleating agent selected from the group consisting of boron nitride particles, molybdenum sulfide particles, and tungsten sulfide particles; and
a thermoplastic resin layer adjacent to the crystallized polyglycolic acid-based resin layer.

## Description

### [Technical Field]

The present invention relates to a laminate comprising a crystallized polyglycolic acid-based resin layer, and a stretched laminate obtained by stretching the laminate.

### [Background Art]

Polyglycolic acid is excellent in microbial degradability and hydrolyzability, and hence has attracted attention as a biodegradable polymer material having a reduced load on the environment. In addition, polyglycolic acid is excellent in gas-barrier properties, heat resistance, and mechanical strength. Japanese Unexamined Patent Application Publication No. 2008-260902 (PTL 1) discloses that the gas-barrier properties, mechanical strength, and heat resistance of a formed article of polyglycolic acid are further improved by increasing the crystallization temperature of the polyglycolic acid. In addition, it is also disclosed that, to increase the crystallization temperature of polyglycolic acid, annealing (heat treatment) is performed during a forming process, and that a crystal nucleating agent such as carbon-based filler, talc, or kaolin is added.

Meanwhile, Japanese Unexamined Patent Application Publication No. 2004-300390 (PTL 2) discloses a glycolic acid-based polymer composition containing a glycolic acid-based polymer and a predetermined amount of boron nitride-based particles, and also discloses that a formed article obtained from the glycolic acid-based polymer composition is excellent in heat resistance and transparency. In addition, evaluation was made as to the heat resistance and transparency of sheets obtained by performing a heat treatment on amorphous sheets of the glycolic acid-based polymer composition in Examples of the PTL 2.

However, although polyglycolic acid-based resins are excellent in mechanical strength, the mechanical strength is not necessarily sufficient when the polyglycolic acid-based resin is used as a single layer. In addition, moisture resistance and economic efficiency are also insufficient. For these reasons, in general, polyglycolic acid-based resin layer is often used together with another resin layer as a multilayer formed product. For example, Japanese Unexamined Patent Application Publication No. Hei 10-138371 (PTL 3) discloses a multilayer hollow container which comprises a layer made of such polyglycolic acid and a thermoplastic resin layer, and which is excellent in gas-barrier property. However, such a laminate comprising a polyglycolic acid-based resin layer and a thermoplastic resin layer sometimes undergoes delamination (interlayer peeling) by impact, depending on the thermoplastic resin used.

### [Citation List]

### [Patent Literature]

[PTL 1] Japanese Unexamined Patent Application Publication No. 2008-260902
[PTL 2] Japanese Unexamined Patent Application Publication No. 2004-300390
[PTL 3] Japanese Unexamined Patent Application Publication No. Hei 10-138371

### [Summary of Invention]

### [Technical Problem]

The present invention has been made in view of the above-described problems of the conventional technologies, and an object of the present invention is to provide a stretched laminate comprising a crystallized polyglycolic acid-based resin layer and being excellent in resistance to delamination caused by impact, and to provide a laminate for stretch forming for obtaining the stretched laminate.

### [Solution to Problem]

The present inventors have conducted earnest study to achieve the above-object. As a result, the present inventors have found that a stretched laminate has an excellent resistance to delamination caused by impact (impact delamination resistance), when the stretched laminate is obtained by stretching a laminate comprising a crystallized polyglycolic acid-based resin layer containing a nucleating agent such as boron nitride and a thermoplastic resin layer adjacent to the crystallized polyglycolic acid-based resin layer, wherein the crystallized polyglycolic acid-based resin has a predetermined spherulite diameter, and a predetermined amount of the nucleating agent is blended. Moreover, the present inventors have found that, in such a stretched laminate, the surface roughness of the crystallized polyglycolic acid-based resin layer falls within a specific range at an interface between the crystallized polyglycolic acid-based resin layer and the thermoplastic resin layer. These finding have led to the completion of the present invention.

Specifically, a laminate of the present invention comprises:
a crystallized polyglycolic acid-based resin layer containing 100 parts by mass of a crystallized polyglycolic acid-based resin having a spherulite diameter of 1 to 30 pm, and 0.0075 to 0.20 parts by mass of at least one nucleating agent selected from the group consisting of boron nitride particles, molybdenum sulfide particles, and tungsten sulfide particles; and
a thermoplastic resin layer adjacent to the crystallized polyglycolic acid-based resin layer.

In the laminate, the thermoplastic resin layer is preferably a polyester-based resin layer. In addition, the nucleating agent preferably has an average particle diameter of 0.10 to 50 µm. Moreover, the laminate of the present invention is preferably a co-extruded laminate or a co-injected laminate.

Meanwhile, a stretched laminate of the present invention is a stretched laminate obtained by co-stretching a crystallized polyglycolic acid-based resin layer containing a crystallized polyglycolic acid-based resin and at least one nucleating agent selected from the group consisting of boron nitride particles, molybdenum sulfide particles, and tungsten sulfide particles, and a thermoplastic resin layer adjacent to the crystallized polyglycolic acid-based resin layer. In addition, in the stretched laminate of the present invention, a surface roughness of the crystallized polyglycolic acid-based resin layer is 0.100 µm or less at an interface between the crystallized polyglycolic acid-based resin layer and the thermoplastic resin layer. Such a stretched laminate can be obtained by performing a stretching treatment on the above-described laminate of the present invention.

Note that, although it is not exactly clear why the stretched laminate obtained by stretching the laminate of the present invention is excellent in impact delamination resistance, the present inventors speculate as follows. Specifically, in the laminate of the present invention, the spherulite diameter of the crystallized polyglycolic acid-based resin is 1 to 30 µm or less, and the content of the nucleating agent is 0.0075 to 0.20 parts by mass relative to 100 parts by mass of the crystallized polyglycolic acid-based resin. Hence, the surface of the crystallized polyglycolic acid-based resin layer in the stretched laminate becomes smooth, so that the interlayer adhesion between the crystallized polyglycolic acid-based resin layer and the thermoplastic resin layer is increased. Presumably as a result of this, the obtained stretched laminate is excellent in impact delamination resistance.

On the other hand, if the spherulite diameter of the crystallized polyglycolic acid-based resin exceeds 30 µm, if the content of the nucleating agent is out of the above-described range, or if the polyglycolic acid-based resin in the laminate is not crystallized (is amorphous), the smoothness of the surface of the crystallized polyglycolic acid-based resin layer in the stretched laminate is lowered. Hence, the interlayer adhesion between the crystallized polyglycolic acid-based resin layer and the thermoplastic resin layer is lowered. Presumably as a result of this, the obtained stretched laminate is poor in impact delamination resistance.

### [Advantageous Effects of Invention]

The present invention makes it possible to obtain a stretched laminate comprising a crystallized polyglycolic acid-based resin layer and being excellent in impact. delamination resistance, and a laminate for stretch forming for obtaining the stretched laminate.

### [Description of Embodiments]

Hereinafter, the present invention will be described in detail on the basis of preferred embodiments thereof.

A laminate of the present invention comprises:
a crystallized polyglycolic acid-based resin layer (hereinafter referred to as "crystallized PGA-based resin layer") containing predetermined amounts of a crystallized polyglycolic acid-based resin (hereinafter referred to as "crystallized PGA-based resin") having a spherulite diameter of 1 to 30 µm, and at least one nucleating agent selected from the group consisting of boron nitride particles, molybdenum sulfide particles, and tungsten sulfide particles; and
a thermoplastic resin layer adjacent to the crystallized PGA-based resin layer.

The laminate can be produced by use of a polyglycolic acid-based resin composition (hereinafter referred to as "PGA-based resin composition") containing predetermined amounts of a polyglycolic acid-based resin (hereinafter referred to as "PGA-based resin") and the nucleating agent, as well as a thermoplastic resin.

Meanwhile, a stretched laminate of the present invention is a stretched laminate obtained by co-stretching a crystallized polyglycolic acid-based resin layer containing a crystallized PGA-based resin and at least one nucleating agent selected from the group consisting of boron nitride particles, molybdenum sulfide particles, and tungsten sulfide particles, and a thermoplastic resin layer adjacent to the crystallized polyglycolic acid-based resin layer. The stretched laminate can be produced by performing a stretching treatment on the above-described laminate.

First, the PGA-based resin and the nucleating agent used in the present invention are described.

### (PGA-based resin)

Examples of the PGA-based resin used in the present invention include glycolic acid homopolymers (hereinafter referred to as "PGA homopolymers", the PGA homopolymers including ring-opening polymers of glycolide, which is a cyclic ester derived from two molecules of glycolic acid) constituted of only the glycolic acid repeating unit represented by the following formula (1):

-[O-CH₂-C(=O)]- (1);

polyglycolic acid copolymers (hereinafter referred to as "PGA copolymers") having the glycolic acid repeating unit; and the like. These PGA-based resins may be used alone or in combination of two or more kinds.

Examples of comonomers used with a glycolic acid monomer in the production of the PGA copolymer include cyclic monomers such as ethylene oxalate (i.e., 1,4-dioxane-2,3-dione), lactides, lactones (for example, β-propiolactone, β-butyrolactone, β-pivalolactone, γ-butyrolactone, δ-valerolactone, β-methyl-δ-valerolactone, ε-caprolactone, and the like), carbonates (for example, trimethylene carbonate and the like), ethers (for example, 1,3-dioxane and the like), ether esters (for example, dioxanone and the like), and amides (ε-caprolactam and the like); hydroxycarboxylic acids such as lactic acid, 3-hydroxypropanoic acid, 3-hydroxybutanoic acid, 4-hydroxybutanoic acid, and 6-hydroxycaproic acid, as well as alkyl esters thereof; substantially equimolar mixtures of an aliphatic diol such as ethylene glycol or 1,4-butanediol with an aliphatic dicarboxylic acid such as succinic acid or adipic acid, or an alkyl ester thereof. These comonomers may be used alone or in combination of two or more of kinds. Of these comonomers, hydroxycarboxylic acids are preferable from the viewpoint of heat resistance.

Examples of a catalyst used when the PGA-based resin is produced by ring-opening polymerization of glycolide include known ring-opening polymerization catalysts including tin-based compounds such as tin halides and organic tin carboxylates; titanium-based compounds such as alkoxy titanates; aluminum-based compounds such as alkoxy aluminums; zirconium-based compounds such as zirconium acetylacetonate; and antimony-based compounds such as antimony halides and antimony oxides.

The PGA-based resin can be produced by a conventionally known polymerization method. A temperature for the polymerization is preferably 120 to 300°C, more preferably 130 to 250°C, particularly preferably 140 to 240°C, and most preferably 150 to 230°C. If the polymerization temperature is lower than the lower limit, the polymerization tends to proceed insufficiently. Meanwhile, if the polymerization temperature exceeds the upper limit, the produced resin tends to be pyrolyzed.

Meanwhile, a time for the polymerization of the PGA-based resin is preferably 2 minutes to 50 hours, more preferably 3 minutes to 30 hours, and particularly preferably 5 minutes to 20 hours. If the polymerization time is less than the lower limit, the polymerization tends to proceed insufficiently. Meanwhile, if the polymerization time exceeds the upper limit, the produced resin tends to be colored.

The content of the glycolic acid repeating unit represented by the above-described formula (1) in the PGA-based resin used in the present invention is preferably 70% by mass or more, more preferably 80% by mass or more, further preferably 90% by mass or more, and particularly preferably 100% by mass. If the content of the glycolic acid repeating unit is less than the lower limit, the degree of crystallinity of the crystallized PGA-based resin tends to be lowered, so that gas-barrier properties of the obtained laminate and stretched laminate (especially the crystallized PGA-based resin layer) tend to deteriorate.

The PGA-based resin has a weight average molecular weight of preferably 30×10⁴ to 80×10⁴, and more preferably 5×10⁴ to 50×10⁴. If the weight average molecular weight of the PGA-based resin is less than the lower limit, the mechanical strengths of the obtained laminate and stretched laminate (especially the crystallized PGA-based resin layer) tend to be lowered. Meanwhile, if the weight average molecular weight exceeds the upper limit, it tends to be difficult to perform melt extrusion or injection molding. Note that the weight average molecular weight is a value determined by gel permeation chromatography (GPC) with respect to polymethyl methacrylate.

In addition, the PGA-based resin has a melt viscosity (temperature: 270°C; shear rate: 122 sec⁻¹) of preferably 50 to 3000 Pa·s, more preferably 100 to 2000 Pa·s, and particularly preferably 100 to 1000 Pa·s. If the melt viscosity is less than the lower limit, the mechanical strengths of the obtained laminate and stretched laminate (especially the crystallized PGA-based resin layer) tend to be lowered. Meanwhile, if the melt viscosity exceeds the upper limit, it tends to be difficult to perform melt extrusion or injection molding.

### (Nucleating agent)

The nucleating agent used in the present invention is at least one selected from the group consisting of boron nitride particles, molybdenum sulfide particles, and tungsten sulfide particles. Of these nucleating agents, boron nitride particles are particularly preferable from the viewpoint that coloration of the crystallized PGA-based resin layer can be suppressed.

The content (blended amount) of the nucleating agent in the PGA-based resin composition used in the present invention is 0.0075 to 0.20 parts by mass (preferably 0.010 to 0.15 parts by mass) relative to 100 parts by mass of the PGA-based resin. If the content of the nucleating agent is less than the lower limit, the surface roughness (the roughness at an interface with the thermoplastic resin layer) of the crystallized PGA-based resin layer exceeds 0.100 µm in the obtained stretched laminate, so that the impact delamination resistance is lowered. Meanwhile, if the content exceeds the upper limit, the surface roughness (the roughness at an interface with the thermoplastic resin layer) of the crystallized PGA-based resin layer exceeds 0.100 µm in the obtained stretched laminate, so that the impact delamination resistance is lowered, or the haze is increased.

In addition, the nucleating agent used in the present invention has an average particle diameter of preferably 0.10 to 50 µm. If the average particle diameter of the nucleating agent is less than the lower limit, the impact delamination resistance of the obtained stretched laminate tends to be lowered. Meanwhile, if the average particle diameter exceeds the upper limit, the spherulite diameter in the crystallized PGA-based resin layer of the obtained laminate exceeds 30 µm, and the surface roughness (the roughness at an interface with the thermoplastic resin layer) of the crystallized PGA-based resin layer exceeds 0.100 µm in the obtained stretched laminate, so that the impact delamination resistance of the stretched laminate tends to be lowered. In addition, the average particle diameter of the nucleating agent is more preferably 0.15 to 45 µm, and particularly preferably 0.20 to 40 µm, from the viewpoint that the impact delamination resistance of the obtained stretched laminate is further improved.

### (Other additives)

To the PGA-based resin composition used in the present invention, various additive such as a heat stabilizer, an end-capping agent, a plasticizer, a heat ray absorber, and an ultraviolet absorber, as well as other thermoplastic resins, may be added, as long as the effects of the present invention are not impaired.

### (PGA-based resin composition)

The PGA-based resin composition used in the present invention can be obtained by mixing the nucleating agent with the PGA-based resin. A method for mixing the nucleating agent is not particularly limited, but examples thereof include a method in which the nucleating agent is mixed with the PGA-based resin or a composition containing the PGA-based resin and other additives prior to production of the laminate,; a method in which the nucleating agent is mixed with the PGA-based resin or a composition containing the PGA-based resin and other additives (for example, side feed) during production of the laminate; and the like. Moreover, it is also possible to produce the PGA-based resin composition by mixing the nucleating agent with a monomer such as glycolic acid in the synthesis of the PGA-based resin.

In addition, the PGA-based resin composition used in the present invention preferably has a crystallization temperature Tc₂ during cooling of 170 to 200°C, from the viewpoint that, when the laminate of the present invention is produced, the crystallized PGA-based resin layer can easily be formed, and the impact delamination resistance of the obtained stretched laminate is improved.

### (Thermoplastic resin)

Examples of the thermoplastic resin used in the present invention include polyester-based resins such as polyethylene terephthalate and polylactic acid, polyolefin-based resins such as such as polyethylene, polypropylene, and ethylene·propylene copolymer, polystyrene-based resins such as polystyrene and styrene·butadiene copolymer, polyvinyl chloride-based resins, polyvinylidene chloride-based resins, polyurethane-based resins, ethylene·vinyl alcohol-based resins, (meth)acrylic acid-based resins, nylon-based resins, sulfide-based resins, polycarbonate-based resins, and the like. These thermoplastic resins may be used alone or in combination of two or more kinds. Of these thermoplastic resins, polyester-based resins are preferable, aromatic polyester-based resins in which at least one of the diol unit and the dicarboxylic acid unit is an aromatic compound unit are more preferable, and aromatic polyester-based resins which are obtained from an aromatic dicarboxylic acid are particularly preferable, from the viewpoint that a laminate can be obtained which has both desirable transparency and desirable gas-barrier property at satisfactory levels, which depend on the application.

### <Laminate>

The laminate of the present invention comprises: a crystallized PGA-based resin layer containing the crystallized PGA-based resin and the nucleating agent; and a thermoplastic resin layer adjacent to the crystallized PGA-based resin layer. The laminate can be produced by use of the PGA-based resin composition and the thermoplastic resin. Accordingly, the constitution of the crystallized PGA-based resin layer of the laminate of the present invention is the same as the constitution of the PGA-based resin composition.

In the laminate of the present invention, the crystallized PGA-based resin has a spherulite diameter of 1 to 30 µm. If the spherulite diameter of the crystallized PGA-based resin is less than the lower limit, the impact delamination resistance of the obtained stretched laminate is lowered. Meanwhile, if the spherulite diameter exceeds the upper limit, the surface roughness (the roughness at an interface with the thermoplastic resin layer) of the crystallized PGA-based resin layer exceeds 0.100 µm in the obtained stretched laminate, so that the impact delamination resistance of the stretched laminate is lowered. In addition, a lower limit of the spherulite diameter of the crystallized PGA-based resin is preferably 5 µm or more, more preferably 7 µm or more, and particularly preferably 9 µm or more, and an upper limit of the spherulite diameter is preferably 29 µm or less, from the viewpoint that the impact delamination resistance of the obtained stretched laminate is improved.

The thickness of the laminate of the present invention is not particularly limited. When the laminate is a bottle preform, the thickness is generally about 2 to 10 mm. In such a laminate, the thickness of the crystallized PGA-based resin layer is not particularly limited, but is preferably 1 to 10% relative to the entire thickness of the laminate (the percentage is almost equal to the percentage by mass). If the thickness of the crystallized PGA-based resin layer is less than the lower limit, the gas-barrier properties of the laminate and the obtained stretched laminate (especially the crystallized PGA-based resin layer) tend to deteriorate. Meanwhile, if the thickness exceeds the upper limit, an extremely large stress is required for blow molding, and the transparency of the obtained stretched laminate tends to be lowered.

In addition, a haze of the laminate of the present invention is not particularly limited. When a laminate having a thickness of 3.4 mm is measured, the haze is preferably 40% or more. If the haze of the laminate is less than the lower limit, the haze of the obtained stretched laminate is sometimes not lowered sufficiently in a case where heating is insufficient during stretching. Here, an upper limit of the haze of the laminate is not particularly limited, but is preferably 99% or less.

A method for producing the laminate of the present invention is not particularly limited. The laminate is preferably produced by co-extruding or co-injecting the PGA-based resin composition and the thermoplastic resin, from the viewpoint that the crystallized PGA-based resin layer and the thermoplastic resin layer are adjacent to each other. A method for the co-extrusion or co-injection is not particularly limited, but a known method can be employed.

By co-extruding or co-injecting the PGA-based resin composition and the thermoplastic resin as described above, the PGA-based resin in the PGA-based resin composition is converted into a crystallized PGA-based resin having the predetermined spherulite diameter, so that a co-extruded laminate or a co-injected laminate comprising the crystallized PGA-based resin layer and the thermoplastic resin layer according to the present invention can be obtained. Typical examples of the co-extruded laminate and the co-injected laminate include bottle preforms and preforms for multilayer stretch-forming of hollow containers or the like.

### <Stretched laminate>

Next, the stretched laminate of the present invention is described. The stretched laminate of the present invention is a stretched laminate obtained by co-stretching the crystallized PGA-based resin layer containing the crystallized PGA-based resin and the nucleating agent, and the thermoplastic resin layer. Typical examples of the stretched laminate include bottles and multilayer stretch-formed containers such as hollow containers.

In the stretched laminate of the present invention, a surface roughness of the crystallized PGA-based resin layer at an interface between the crystallized PGA-based resin layer and the thermoplastic resin layer is 0.100 µm or less. The stretched laminate having such a surface roughness is excellent in impact delamination resistance.

The thickness of the stretched laminate of the present invention is not particularly limited. When the stretched laminate is a bottle, the thickness is generally about 100 to 5000 µm. In the stretched laminate, the thickness of the crystallized PGA-based resin layer is not particularly limited, but is preferably 1 to 10% relative to the entire thickness of the stretched laminate (the percentage is almost equal to the percentage by mass). If the thickness of the crystallized PGA-based resin layer is less than the lower limit, the gas-barrier properties of the stretched laminate (especially the crystallized PGA-based resin layer) tend to deteriorate. Meanwhile, if the thickness exceeds the upper limit, the transparency of the stretched laminate tends to be lowered.

The stretched laminate can be produced by performing a stretching treatment on the laminate. Accordingly, the constitution of the crystallized PGA-based resin layer in the stretched laminate of the present invention is the same as the constitution of the crystallized PGA-based resin layer in the laminate, i.e., the constitution of the PGA-based resin composition.

The stretching treatment is not particularly limited, but examples thereof include known stretching methods such as blow molding. In addition, the stretching treatment may be uniaxial stretching or biaxial stretching. The stretching ratio is not particularly limited, but is generally 2 or more, and preferably 4 to 25, in terms of area ratio. Note that, by performing such a stretching treatment, a stretched laminate having a low haze and an excellent transparency can be obtained. The haze of the stretched laminate of the present invention is not particularly limited. When measured for a stretched laminate having a thickness of 280 µm, the haze is preferably 0.1 to 10%, more preferably 0.5 to 7%, further preferably 0.8 to 5%, and particularly preferably 1 to 3%.

### [Examples]

Hereinafter, the present invention will be described more specifically on the basis of Examples and Comparative Examples. However, the present invention is not limited to Examples below. Note that characteristics of PGA resin compositions, laminates for stretch forming (three-layer preforms), and stretched laminates (bottles) were evaluated by the following methods.

### <Crystallization temperature Tc₂>

A PGA resin composition was pressed by use of a press molding machine (manufactured by SHINTO Metal Industries Corporation) at a temperature of 280°C and a pressure of 20 kgf/cm² for 3 minutes, and then cooled. Thus, a sheet having a thickness of 200 µm was obtained. The sheet was cooled from 280°C at 20°C/minute by use of a differential scanning calorimeter ("DSC30/TC15" manufactured by Mettler Toledo International Inc.). The temperature of an exothermic peak which corresponded to the crystallization observed during the cooling was regarded as a crystallization temperature Tc₂.

### <Spherulite diameter>

Inner and outer layers were peeled off from a three-layer preform. Then, a crystallization state of the obtained crystallized PGA resin layer (intermediate layer) was observed by use of a polarizing microscope ("BH-2" manufactured by Olympus Corporation), and a spherulite diameter was measured.

### <Haze>

Measurement was performed by use of a haze meter ("TCH-III-DP" manufactured by Tokyo Denshoku. Co., Ltd.) . A three-layer preform was split in the longitudinal direction, and then measured with a curved concave placed on the incident light side. For a bottle, a flat surface in a body portion was cut out, and then measured with an inside surface thereof facing incident light.

### <Surface Roughness Ra>

An intermediate layer (crystallized PGA resin layer) was obtained by peeling off the inner and outer layers of a bottle. The surface roughness (the roughness of the interface with the outer PET layer) of the crystallized PGA resin layer was measured by use of a stylus-type surface roughness measuring instrument ("SURFCOM 550AD" manufactured by TOKYO SEIMITSU CO., LTD.) according to the method described in JIS B0601- The measurement conditions were as follows: the radius of the conical stylus was 5 µmR, the measuring force was 4 mN or less, and the cut-off was 0.08 mm. Note that the above-described measurement was conducted 10 times on the same sample at randomly selected positions, and an arithmetic mean value of the obtained results was regarded as an arithmetic mean surface roughness Ra.

### <Delamination resistance>

A bottle was filled with carbonated water at 4.2 atm, capped, and left at 23°C for 24 hours, and then subjected to a pendulum impact test. Observation was made as to whether or not impact delamination occurred between the outer PET layer and the crystallized PGA resin layer. The impact test was conducted on 20 bottles, and the number of bottles in which no impact delamination occurred was counted.

### (Example 1)

### (1) Preparation of PGA resin composition

As a nucleating agent, 0.010 parts by mass of boron nitride particles ("HGP" manufactured by Denki Kagaku Kogyo Kabushiki Kaisha, average particle diameter (D50): 5 µm) were dry blended with 100 parts by mass of a PGA resin (manufactured by Kureha Corporation, weight average molecular weight: 19×10⁴, melt viscosity (at a temperature of 270°C and a shear rate of 122 sec⁻¹): 600 Pa·s, glass transition temperature: 38°C, melting point: 220°C). The blend was fed to a small biaxial kneader ("TEM-26SS" manufactured by Toshiba Machine Co., Ltd.) in which the temperatures of six sections defined between a feeding unit and a discharging unit were set to 220°C, 250°C, 270°C, 270°C, 250°C, and 240°C, respectively, in this order from the feeding unit, and the temperature of a die was set to 230°C. Then, melt kneading was conducted at a screw rotation speed of 200 rpm, and the kneaded blend was discharged at a discharge rate of 10 kg/h. Thus, a pelletized PGA resin composition was obtained. The PGA resin composition was dried at 150°C for 3 hours. The crystallization temperature Tc₂ of the PGA resin composition was measured according to the above-described method. Table 1 shows the result.

### (2) Fabrication of three-layer preform

A bottle preform (hereinafter referred to as "three-layer preform") comprising three layers of PET/PGA/PET (amount of PGA filled: 3% by mass) and having a thickness of 3.4 mm was fabricated. For the fabrication, the PGA resin composition obtained in the above-described (1) was used as a resin for an intermediate layer; polyethylene terephthalate ("CB602S" manufactured by Far Eastern Textile Limited, weight average molecular weight: 2×10⁴, melt viscosity (temperature 290°C, shear rate 122 sec⁻¹): 550 Pa·s, glass transition temperature: 75°C, melting point: 249°C) was used as a resin for the inner and outer layers; and a co-injection molding machine capable of independently controlling the temperatures of barrels and runners for the layers was used. The temperatures of the barrel and the runner for the intermediate layer were set to 255°C and 250°C, respectively, and the temperatures of barrels and runners for the inner and outer layers were all set to 290°C. The obtained three-layer preform was measured for haze, and spherulite diameter of the crystallized PGA resin layer (intermediate layer), according to the above-described methods. Table 1 shows the results.

### (3) Fabrication of bottle

A three-layer preform was fabricated in the same manner as in the above-described (2) . The three-layer preform was blow molded at 110°C. Thus, a colorless transparent bottle comprising three layers of PET/PGA/PET (amount of PGA filled: 3% by mass) and having a thickness of 280 µm was obtained. The obtained bottle was measured for haze, and arithmetic mean surface roughness (roughness of an interface with the outer PET layer) Ra of the crystallized PGA resin layer (intermediate layer) according to the above-described methods, and evaluated for impact delamination resistance. Table 1 shows the results.

### (Examples 2 to 5)

PGA resin compositions were prepared and three-layer preforms and bottles were fabricated in the same manner as in Example 1, except that the amounts of the boron nitride particles blended were changed to 0.030 parts by mass, 0.050 parts by mass, 0.070 parts by mass, and 0.100 parts by mass, respectively, relative to 100 parts by mass of the PGA resin. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 1 shows the results.

### (Examples 6 to 8)

PGA resin compositions were prepared and three-layer preforms and bottles were fabricated in the same manner as in Example 1, except that 0.010 parts by mass, 0.030 parts by mass, and 0.050 parts by mass of boron nitride particles ("SP7" manufactured by Denki Kagaku Kogyo Kabushiki Kaisha) having an average particle diameter (D50) of 2 µm were used respectively instead of 0.010 parts by mass of the boron nitride particles having an average particle diameter (D50) of 5 µm. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 1 shows the results.

### (Examples 9 to 11)

PGA resin compositions were prepared and three-layer preforms and bottles were fabricated in the same manner as in Example 1, except that 0.010 parts by mass, 0.030 parts by mass, and 0.100 parts by mass of boron nitride particles ("SCP-1" manufactured by ESK Ceramics) having an average particle diameter (D50) of 0.5 µm were used respectively instead of 0.010 parts by mass of the boron nitride particles having an average particle diameter (D50) of 5 µm. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 1 shows the results.

### (Examples 12 and 13)

PGA resin compositions were prepared and three-layer preforms and bottles were fabricated in the same manner as in Example 1, except that 0.010 parts by mass and 0.030 parts by mass of boron nitride particles ("1180YL" manufactured by Nanostructured Amorphous Materials) having an average particle diameter (D50) of 0.14 µm were used respectively instead of 0.010 parts by mass of the boron nitride particles having an average particle diameter (D50) of 5 µm. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 1 shows the results.

### (Examples 14 to 16)

PGA resin compositions were prepared and three-layer preforms and bottles were fabricated in the same manner as in Example 1, except that 0.010 parts by mass, 0.030 parts by mass, and 0.100 parts by mass of boron nitride particles ("UHP-EX" manufactured by Showa Denko K. K.) having an average particle diameter (D50) of 38 µm were used respectively instead of 0.010 parts by mass of the boron nitride particles having an average particle diameter (D50) of 5 µm. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 1 shows the results.

### (Comparative Examples 1 and 2)

PGA resin compositions were prepared and three-layer preforms and bottles were fabricated in the same manner as in Example 1, except that the amounts of the boron nitride particles blended were changed to 0.005 parts by mass and 0.300 parts by mass, respectively, relative to 100 parts by mass of the PGA resin. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 2 shows the results.

### (Comparative Example 3)

A PGA resin composition was prepared and a three-layer preform and a bottle were fabricated in the same manner as in Example 1, except that 0.300 parts by mass of boron nitride particles ("SCP-1" manufactured by ESK Ceramics) having an average particle diameter (D50) of 0.5 µm were used instead of 0.010 parts by mass of the boron nitride particles having an average particle diameter (D50) of 5 µm. The PGA resin composition was measured for crystallization temperature Tc₂, the three-layer preform was measured for haze and spherulite diameter of the crystallized PGA resin layer (intermediate layer), and the bottle was measured for haze and arithmetic mean surface roughness (roughness of an interface with the outer PET layer) Ra of the crystallized PGA resin layer (intermediate layer), according to the above-described methods. In addition, the bottle was evaluated for impact delamination resistance. Table 2 shows the results.

### (Comparative Example 4)

A PGA resin composition was prepared and a three-layer preform and a bottle were fabricated in the same manner as in Example 1, except that 0.005 parts by mass of boron nitride particles ("UHP-EX" manufactured by Showa Denko K. K.) having an average particle diameter (D50) of 38 µm were used instead of 0.010 parts by mass of the boron nitride particles having an average particle diameter (D50) of 5 µm. The PGA resin composition was measured for crystallization temperature Tc₂, the three-layer preform was measured for haze and spherulite diameter of the crystallized PGA resin layer (intermediate layer), and the bottle was measured for haze and arithmetic mean surface roughness (roughness of an interface with the outer PET layer) Ra of the crystallized PGA resin layer (intermediate layer), according to the above-described methods. In addition, the bottle was evaluated for impact delamination resistance. Table 2 shows the results.

### (Comparative Examples 5 to 7)

PGA resin compositions were prepared and three-layer preforms and bottles were fabricated in the same manner as in Example 1, except that 0.010 parts by mass, 0.030 parts by mass, and 0.100 parts by mass of boron nitride particles ("UHP-EX10" manufactured by Showa Denko K. K.) having an average particle diameter (D50) of 75 µm were used respectively instead of 0.010 parts by mass of the boron nitride particles having an average particle diameter (D50) of 5 µm. The PGA resin compositions were measured for crystallization temperature Tc₂, the three-layer preforms were measured for haze and spherulite diameter of the crystallized PGA resin layer (intermediate layer), and the bottles were measured for haze and arithmetic mean surface roughness (roughness of an interface with the outer PET layer) Ra of the crystallized PGA resin layer (intermediate layer), according to the above-described methods. In addition, the bottles were evaluated for impact delamination resistance. Table 2 shows the results.

### (Comparative Example 8)

A PGA resin composition was prepared and a three-layer preform and a bottle were fabricated in the same manner as in Example 1, except that no boron nitride particles were blended. The PGA resin composition was measured for crystallization temperature Tc₂, the three-layer preform was measured for haze, and the bottle was measured for haze and arithmetic mean surface roughness (roughness of an interface with the outer PET layer) Ra of the crystallized PGA resin layer (intermediate layer), according to the above-described methods. In addition, the bottle was evaluated for impact delamination resistance. Table 2 shows the results. Note that a small number of spherulites having spherulite diameters of about 35 µm were observed in the PGA resin layer (intermediate layer) of the three-layer preform. However, most portions (95% or more in terms of area ratio in the observed visual field) of the PGA resin layer were amorphous.

### (Comparative Example 9)

A PGA resin composition was prepared and a three-layer preform was fabricated in the same manner as in Example 1, except that 0.030 parts by mass of graphite ("J-CBP" manufactured by Nippon Graphite Industories, ltd., average particle diameter (D50): 5 µm) was used instead of 0.010 parts by mass of the boron nitride particles. The three-layer preform was blackish. In addition, fabrication of a bottle by use of the three-layer preform was attempted. However, the three-layer preform was unable to be blow molded into the predetermined shape. It was difficult to measure arithmetic mean surface roughness (roughness of an interface with the outer PET layer) Ra of the crystallized PGA resin layer (intermediate layer) of bottles and to evaluate delamination resistance of bottles.

**[Table 1]**

| | Boron nitride | | | Resin composition | Preform | | Bottle | | |
|---|---|---|---|---|---|---|---|---|---|
| | Kind | Average particle diameter (µm) | Blended amount (part by mass) | Tc₂ (°C) | Spherulite diameter (µm) | Haze (%) | Surface roughness Ra (µm) | Delamination resistance | Haze (%) |
| Ex. 1 | HGP | 5 | 0,010 | 170.6 | 20 | 57 | 0.035 | 19/20 | 1.8 |
| Ex. 2 | | | 0.030 | 172.1 | 18 | 60 | 0.038 | 20/20 | 2.1 |
| Ex. 3 | | | 0.050 | 172.6 | 15 | 66 | 0.048 | 19/20 | 3.4 |
| Ex. 4 | | | 0.070 | 174.5 | 15 | 75 | 0.058 | 20/20 | 3.4 |
| Ex. 5 | | | 0.100 | 174.7 | 12 | 83 | 0.066 | 19/20 | 6.7 |
| Ex. 6 | SP7 | 2 | 0.010 | 172.8 | 18 | 60 | 0.0554 | 20/20 | 1.1 |
| Ex. 7 | | | 0.030 | 176.2 | 12 | 64 | 0.052 | 19/20 | 1.6 |
| Ex. 8 | | | 0.050 | 178.3 | 11 | 68 | 0.039 | 19/20 | 1.9 |
| Ex. 9 | SCP-1 | 0.5 | 0.010 | 173.1 | 15 | 63 | 0.031 | 20/20 | 1.4 |
| Ex. 10 | | | 0.030 | 178.5 | 11 | 65 | 0.033 | 18/20 | 1.8 |
| Ex. 11 | | | 0.100 | 178.4 | 13 | 68 | 0.056 | 19/20 | 2.1 |
| Ex, 12 | 1180YL | 0.14 | 0.010 | 175.4 | 9 | 63 | 0.050 | 17/20, | 0.6 |
| Ex. 13 | | | 0.030 | 179.5 | 5 | 66 | 0.058 | 15/20 | 1.5 |
| Ex. 14 | UHP-EX | 38 | 0.010 | 168.2 | 29 | 70 | 0.065 | 19/20 | 2.1 |
| Ex. 15 | | | 0.030 | 171.5 | 27 | 77 | 0.068 | 19/20 | 2.3 |
| Ex. 16 | | | 0.100 | 173.8 | 24 | 77 | 0.085 | 18/20 | 2.2 |

**[Table 2]**

| | Boron nitride | | | Resin composition | Preform | | Bottle | | |
|---|---|---|---|---|---|---|---|---|---|
| | Kind | Average particle diameter | Blended amount | Tc₂ | Spherulite diameter | Haze | Surface roughness Ra | Delamination resistance | Haze |
| | | (µm) | (parts by mass) | (°C) | (µm) | (%) | (µm) | | (%) |
| Comp. Ex. 1 | HGP | 5 | 0.005 | 167.0 | 30 | 52 | 0.105 | 14/20 | 1.8 |
| Comp. Ex. 2 | | | 0.300 | 182.6 | 13 | 88 | 0.111 | 16/20 | 7.2 |
| Comp. Ex. 3 | SCP-1 | 0.5 | 0.300 | 184.4 | 11 | 91 | 0.122 | 17/20 | 8.0 |
| Comp. Ex. 4 | UHP-EX | 38 | 0.005 | 162.4 | 30 | 60 | 0.145 | 12/20 | 1.8 |
| Comp. Ex. 5 | UHP-EX10 | 75 | 0.010 | 160.5 | 45 | 58 | 0.162 | 12/20 | 3.7 |
| Comp. Ex. 6 | | | 0.030 | 170.3 | 36 | 60 | 0.109 | 14/20 | 3.5 |
| Comp. Ex. 7 | | | 0.100 | 172.9 | 31 | 63 | 0.124 | 13/20 | 6.8 |
| Comp. Ex. 8 | B60 | 0 | 0.000 | 127.4 | amorphous | 35 | 0.198 | 1/20 | 9.9 |

As is apparent from the results shown in Tables 1 and 2, in the cases (Examples 1 to 16) where a stretching treatment was performed on laminates (three-layer preforms) of the present invention in which the content of boron nitride particles was in a predetermined range and in which the spherulite diameter of the crystallization PGA resin was in a predetermined range, the stretched laminates (bottles) of the present invention were obtained each of which has an arithmetic mean surface roughness Ra of the crystallized PGA resin layer surface (the interface with the outer PET layer) of 0.100 µm or less. It was verified that the stretched laminates were excellent in impact delamination resistance.

On the other hand, in the cases (Comparative Examples 1 and 4) where the contents of boron nitride particles were less than the lower limit of the range according to the present invention, in the cases (Comparative Example 5 to 7) where the spherulite diameters of the crystallization PGA resins of the laminates (three-layer preforms) exceeded 30 µm, and in the case (Comparative Example 8) where the PGA resin of the laminate (three-layer preform) was amorphous, the obtained stretched laminates had an arithmetic mean surface roughness Ra of the crystallized PGA resin layer surface (the interface with the outer PET layer) exceeding 0.100 µm, and were poor in impact delamination resistance.

### [Industrial Applicability]

As described above, the present invention makes it possible to obtain a stretched laminate excellent in resistance to delamination caused by impact.

Accordingly, the stretched laminate of the present invention is useful as multilayer films, multilayer sheets, multilayer hollow containers, and the like, because of the excellence in resistance to delamination caused by impact.

## Claims

1. A laminate comprising:
a crystallized polyglycolic acid-based resin layer containing 100 parts by mass of a crystallized polyglycolic acid-based resin having a spherulite diameter of 1 to 30 µm, and 0.0075 to 0.20 parts by mass of at least one nucleating agent selected from the group consisting of boron nitride particles, molybdenum sulfide particles, and tungsten sulfide particles; and
a thermoplastic resin layer adjacent to the crystallized polyglycolic acid-based resin layer.

2. The laminate according to claim 1, wherein the thermoplastic resin layer is a polyester-based resin layer.

3. The laminate according to claim 1 or 2, wherein the nucleating agent has an average particle diameter of 0.10 to 50 µm.

4. The laminate according to any one of claims 1 to 3, which is a co-extruded laminate or a *co-injected* laminate.

5. A stretched laminate obtained by co-stretching a crystallized polyglycolic acid-based resin layer containing a crystallized polyglycolic acid-based resin and at least one nucleating agent selected from the group consisting of boron nitride particles, molybdenum sulfide particles, and tungsten sulfide particles, and a thermoplastic resin layer adjacent to the crystallized polyglycolic acid-based resin layer, wherein
a surface roughness of the crystallized polyglycolic acid-based resin layer is 0.100 µm or less at an interface between the crystallized polyglycolic acid-based resin layer and the thermoplastic resin layer.

6. The stretched laminate according to claim 5, which is obtained by performing a stretching treatment on the laminate according to any one of claims 1 to 4.
